# EUROPEAN PATENT APPLICATION

(11) **EP 4 806 714 A1**
(43) Date of publication of application: **16.09.2026**
(21) Application number: 25162953.1
(22) Date of filing: 11.03.2025
(51) Int. Cl.: B60L 15/20, B60W 10/08, B60W 10/119, B60K 1/02

(54) **A COMPUTER SYSTEM AND A METHOD FOR CONTROLLING A VEHICLE**

(71) Applicant: Volvo Construction Equipment AB, 631 85 Eskilstuna (SE)
(72) Inventor: JONASSON, Mats, 433 49 PARTILLE (SE); JOHANSSON, Håkan, 352 42 VÄXJÖ (SE); KVIST, Roland, 360 42 BRAÅS (SE)
(74) Representative: Kransell & Wennborg KB

(57) **Abstract**

A method and a computer system comprising processing circuitry configured to:
monitor a first property indicative of an instantaneous normal force between each one of a plurality of driven wheels (18, 19, 28, 29, 30, 31) of a vehicle (10), such as an articulated hauler, and a ground surface (2) below the driven wheels,
detect that the monitored first property indicates a decrease in the instantaneous normal force between a first subset of the driven wheels and the ground surface, and in response thereto control an electric powertrain arrangement of the vehicle to reduce a torque delivered to the first subset of driven wheels, and to optionally increase a torque delivered to a second subset of the driven wheels for which the monitored first property is not indicative of the decrease in the instantaneous normal force.

## Description

### TECHNICAL FIELD

The disclosure relates generally to control of electric powertrain arrangements. In particular aspects, the disclosure relates to a computer system and a method for controlling an electric powertrain arrangement of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Working machines such as dump trucks usually comprise several driven axles. A common configuration is to have a front driven axle provided in a front unit of the working machine, driving two front wheels, and two rear driven axles provided in a rear unit of the working machine, driving four rear wheels. Traditionally, a single engine has been provided for powering all three axles, the axles being interconnected by propellor shafts. A transfer gearbox comprising a differential is provided between the front and rear units for distributing torque, and differentials are further provided on each axle for enabling the wheels of the axle to rotate with different speeds. In such drive trains, all three axles may be mechanically locked such that all wheels of the working machine rotate with the same speed. This is useful for example when the ground is uneven and one of the wheels, or one wheel pair, is lifted from the ground.

In electrically operated working machines, it is typically advantageous to have several electric motors, such as one or even two electric motors per driven axle of the working machine.

### SUMMARY

According to a first aspect of the disclosure, a computer system is provided that comprises processing circuitry configured to:
monitor a first property indicative of an instantaneous normal force between each wheel of a plurality of driven wheels of a vehicle and a ground surface below the driven wheels,
detect that the monitored first property indicates a decrease in the instantaneous normal force between a first subset of the driven wheels and the ground surface, and in response thereto control an electric powertrain arrangement of the vehicle to reduce a torque delivered to the first subset of driven wheels.

The first aspect of the disclosure may seek to provide an in at least some aspect improved computer system for controlling an electric powertrain arrangement of a vehicle in connection with operation of the vehicle on uneven ground. A technical benefit may include an improved ability to prevent torque from being delivered to wheels of the vehicle that are lifted off the ground or that have poor ground contact, thereby preventing the lifted wheels from spinning in an uncontrolled manner.

Optionally in some examples, including in at least one preferred example, the processing circuitry is further configured to control the electric powertrain arrangement to increase a torque delivered to a second subset of the driven wheels for which the monitored first property is not indicative of the decrease in the instantaneous normal force. A technical benefit may include a redistribution of torque to those wheels of the vehicle that still have ground contact, thereby improving traction and energy efficiency.

Optionally in some examples, including in at least one preferred example, the processing circuitry is configured to control the electric powertrain arrangement by adjusting the torques delivered to the first subset of driven wheels and the second subset of driven wheels, respectively, such that a total driving torque delivered by the electric powertrain arrangement to drive the vehicle remains constant or essentially constant. A technical benefit may include an improved riding comfort and an efficient propelling of the vehicle.

Optionally in some examples, including in at least one preferred example, when the first subset of driven wheels comprises two first driven wheels provided on a first driven axle of a plurality of driven axles of the vehicle, and the second subset of driven wheels comprises at least two second driven wheels provided on at least one second driven axle of the plurality of driven axles, the processing circuitry is configured to control the electric powertrain arrangement by controlling at least one first electric motor driving the first driven axle to reduce its output torque, and controlling at least one second electric motor driving the at least one second driven axle to increase its output torque. The vehicle may comprise one front driven axle and two rear driven axles, wherein the first subset of driven wheels is provided on a first one of the rear driven axles, and wherein the second subset of wheels is provided on a second one of the rear driven axles and on the front driven axle. Each driven axle may comprise one or two electric motor(s) driving the axle. In this case, the torque may be redistributed by controlling the electric motor(s) driving the first driven axle to reduce its output torque, and by controlling the electric motors driving the front driven axle and the second rear driven axle, respectively, to increase their output torques.

Optionally in some examples, including in at least one preferred example, when the first subset of driven wheels comprises one of two first driven wheels provided on a first driven axle of a plurality of driven axles of the vehicle, and when the second subset of driven wheels comprises another one of the two first driven wheels provided on the first driven axle, the processing circuitry is configured to control the electric powertrain arrangement by one of:
controlling the two first driven wheels to rotate together, such as by locking a differential, or by otherwise rotatably connecting drive shafts of the two driven wheels, or
controlling a first electric wheel motor driving the one of the two first driven wheels to reduce its output torque and controlling a second electric wheel motor driving the other one of the two first driven wheels to increase its output torque.

A technical benefit may include that spinning of a single lifted wheel, or of several wheels on the same side of the vehicle, may efficiently be prevented.

Optionally in some examples, including in at least one preferred example, the processing circuitry is configured to detect that the monitored first property indicates a decrease by determining a first value of the first property at a first point in time and a second value of the first property at a second point in time, and determining that a difference between the first and second values is indicative of the decrease in the instantaneous normal force when the difference meets a predefined criterion. For example, the predefined criterion may be considered met when the difference is indicative of a decrease in the instantaneous normal force larger than a predetermined threshold. When the predefined criterion is not met, no decrease is detected. Hence, the predefined criterion may be set to achieve a desired sensibility of the system.

Optionally in some examples, including in at least one preferred example, the first property comprises a tire deformation, and the processing circuitry is configured to monitor the first property by receiving sensor signals from a plurality of sensors, each one of the driven wheels comprising at least one of the sensors. A technical benefit may include an effective indication of the instantaneous normal force.

Optionally in some examples, including in at least one preferred example, the processing circuitry is further configured to monitor an instantaneous wheel speed of each wheel of the plurality of driven wheels and monitor an actual vehicle speed, wherein the processing circuitry is further configured to control the electric powertrain arrangement based on a relation between the instantaneous wheel speed of each driven wheel and the actual vehicle speed. A technical benefit may include an improved possibility to detect wheel spinning due to poor traction and in response thereto reduce the torque provided to the spinning wheel.

According to a second aspect of the disclosure, a vehicle comprising a plurality of driven wheels configured to engage a ground surface, an electric powertrain arrangement configured to drive the plurality of driven wheels, a plurality of sensors configured to collect measurement data relating to at least the first property, and the computer system of the first aspect is provided. The second aspect of the disclosure may seek to provide an in at least some aspect improved vehicle. A technical benefit may include a vehicle with an improved ability to prevent torque delivery to wheels that are lifted off the ground or that have poor ground contact. Further technical benefits and advantageous embodiments correspond to those described above in connection with the first aspect.

Optionally in some examples, including in at least one preferred example, the vehicle comprises at least three driven axles, each driven axle comprising at least two of the plurality of driven wheels, the electric powertrain arrangement comprising at least three electric motors, wherein each driven axle is configured to be driven by a respective at least one of the at least three electric motors. The vehicle may be a working machine, such as an articulated dump truck or similar.

According to a third aspect of the disclosure, a computer-implemented method is provided. The method comprises:
monitoring, by processing circuitry of a computer system, a first property indicative of an instantaneous normal force between each one of a plurality of driven wheels of a vehicle and a ground surface below the driven wheels,
detecting, by the processing circuitry, that the monitored first property indicates a decrease in the instantaneous normal force between a first subset of the driven wheels and the ground surface, and in response thereto controlling, by the processing circuitry, an electric powertrain arrangement of the vehicle to reduce a torque delivered to the first subset of driven wheels. Technical benefits and advantageous embodiments correspond to those described above in connection with the first aspect.

Optionally in some examples, including in at least one preferred example, the method further comprises controlling, by the processing circuitry, the electric powertrain arrangement to increase a torque delivered to a second subset of the driven wheels for which the monitored first property is not indicative of the decrease in the instantaneous normal force.

Optionally in some examples, including in at least one preferred example, the controlling of the electric powertrain arrangement comprises adjusting the torques delivered to the first subset of driven wheels and the second subset of driven wheels, respectively, such that a total driving torque delivered by the electric powertrain arrangement to drive the vehicle remains constant or essentially constant.

Optionally in some examples, including in at least one preferred example, when the first subset of driven wheels comprises two first driven wheels provided on a first driven axle of a plurality of driven axles of the vehicle, and the second subset of driven wheels comprises at least two second driven wheels provided on at least one second driven axle of the plurality of driven axles, the controlling of the electric powertrain arrangement comprises controlling at least one first electric motor driving the first driven axle to reduce its output torque, and controlling at least one second electric motor driving the at least one second driven axle to increase its output torque.

Optionally in some examples, including in at least one preferred example, when the first subset of driven wheels comprises one of two first driven wheels provided on a first driven axle of a plurality of driven axles of the vehicle, and when the second subset of driven wheels comprises another one of the two first driven wheels provided on the first driven axle, the controlling of the electric powertrain arrangement comprises one of: controlling the two first driven wheels to rotate together, or controlling a first electric wheel motor driving the one of the two first driven wheels to reduce its output torque, and controlling a second electric wheel motor driving the other one of the two first driven wheels to increase its output torque.

Optionally in some examples, including in at least one preferred example, the detecting of that the monitored first property indicates a decrease comprises determining a first value of the first property at a first point in time and a second value of the first property at a second point in time, and determining that a difference between the first and second values is indicative of the decrease in the instantaneous normal force when the difference meets a predefined criterion.

Optionally in some examples, including in at least one preferred example, the first property comprises a tire deformation, and the monitoring of the first property comprises receiving sensor signals from a plurality of sensors, each one of the driven wheels comprising at least one of the sensors.

Optionally in some examples, including in at least one preferred example, the method further comprises monitoring, by the processing circuitry, an instantaneous wheel speed of each wheel of the plurality of driven wheels, monitoring, by the processing circuitry, an actual vehicle speed, wherein the controlling of the electric powertrain arrangement is further based on a relation between the instantaneous wheel speed of each driven wheel and the actual vehicle speed.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings. The drawings are schematic and are not drawn to scale. Like reference numbers refer to like elements, unless indicated otherwise.
**FIG. 1** is a side view of an exemplary vehicle according to an example.
**FIG. 2** is an exemplary electric powertrain arrangement of a vehicle according to an example.
**FIG. 3** is an exemplary system diagram illustrating a computer system according to an example.
**FIG. 4** **is** a flow chart illustrating an exemplary method of controlling an electric powertrain arrangement according to an example.
**FIG. 5** is an exemplary vehicle in a first driving scenario.
**FIG. 6** is the vehicle of FIG. 5 in a second driving scenario.
**FIG. 7** is a driven axle of a vehicle in a third driving scenario.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Working machines such as dump trucks usually comprise several driven axles. A common drivetrain configuration comprises a front driven axle provided in a front section of the working machine, driving two front wheels, and two rear driven axles provided in a rear section of the working machine, driving four rear wheels. In such a drivetrain, a single combustion engine has traditionally been provided for powering all three axles, the axles being interconnected by propellor shafts. A transfer gearbox comprising a differential is in this case provided between the front and rear units for distributing torque between the axles, and differentials are further provided on each axle for enabling the wheels of the axle to rotate with different speeds. In such drive trains, all three axles may be mechanically locked such that all wheels of the working machine rotate with the same speed. This is useful for example when the ground is uneven and one of the wheels, or one wheel pair, is lifted from the ground.

In electrically operated working machines, it is typically advantageous to have a powertrain comprising several electric motors, such as one or even two electric motors per driven axle of the working machine, instead of a single motor driving all wheels. However, such a powertrain configuration makes it impossible to mechanically lock all axles together in case of one or more wheels being lifted off the ground.

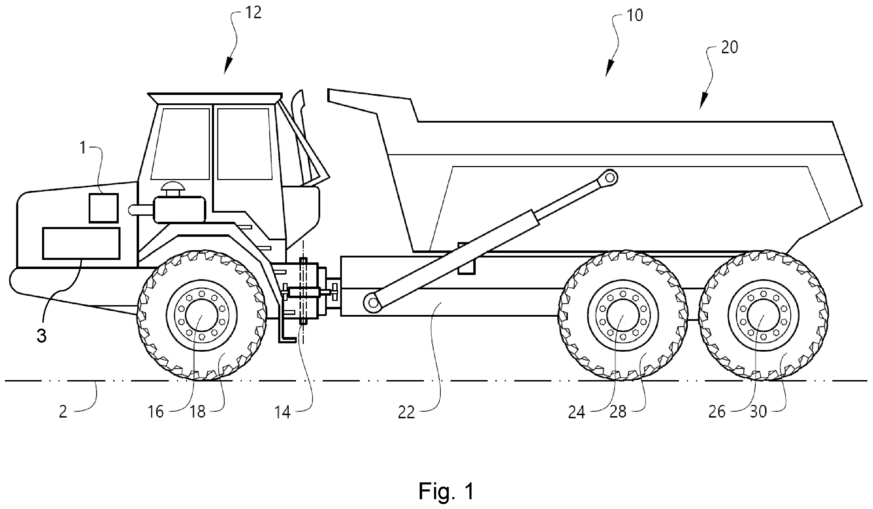

**FIG. 1** is a lateral side view of an exemplary vehicle 10 according to an example of the present disclosure. The illustrated vehicle 10 is a working machine in the form of a frame-steered articulated hauler, also referred to as a dumper, or a dump truck. The vehicle 10 is provided on a ground surface 2 extending below the vehicle 10.

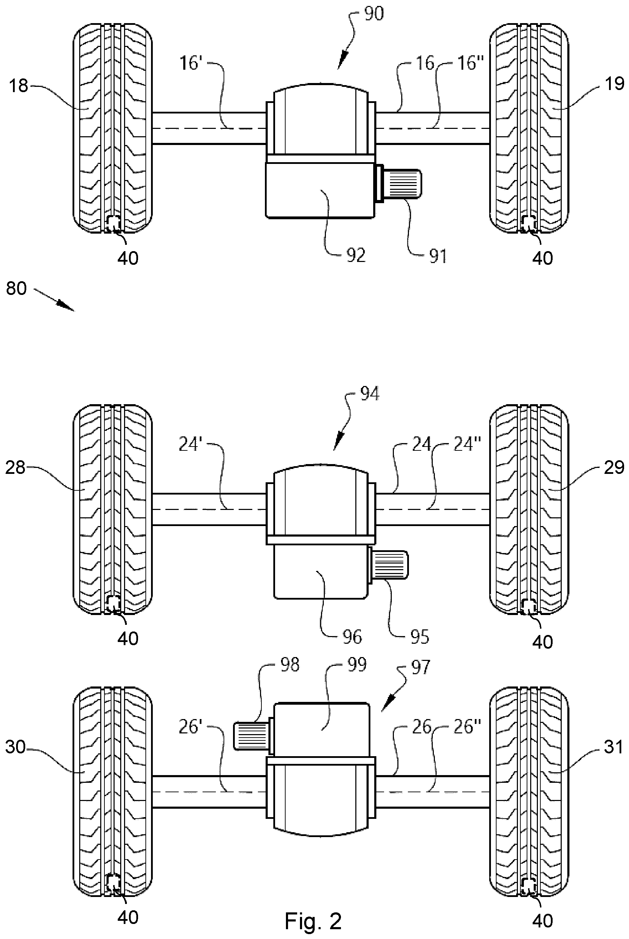

The vehicle 10 illustrated therein comprises a front vehicle section 12 comprising a front frame 14 and a first driven axle 16, also referred to as a front driven axle 16. As can be seen in **FIG. 2**, the front driven axle 16 is arranged as a casing housing left 16' and right 16" first drive shafts connected to a respective one of a first pair of wheels 18, 19, although only the left front wheel 18 is visible in FIG. 1. As will be evident below in relation to the disclosure of FIG. 2, the first pair of wheels 18, 19 is propelled by a first electric powertrain.

The vehicle 10 further comprises a rear vehicle section 20 comprising a rigid rear frame 22, a second driven axle 24, also referred to as a front rear axle 24, and a third driven axle 26, also referred to as a back rear axle 26. The rear vehicle section 20 is pivotably connected to the front vehicle section 12. Again, with reference to FIG. 2, the front rear axle 24 is arranged as a casing housing left 24' and right 24" second drive shafts connected to a respective one of a second pair of wheels 28, 29. As can also be seen in FIG. 2, the back rear axle 26 is arranged as a casing housing left 26' and right 26" third drive shafts connected to a respective one of a third pair of wheels 30, 31. The vehicle 10 thus comprises a plurality of driven wheels 18, 19, 28, 29, 30, 31, each one configured to be in contact with the ground surface 2 during propulsion of the vehicle 10.

Although the FIG. 1 embodiment of the vehicle 10 comprises one front axle 16 and two rear axles 24, 26, it is envisaged that other embodiments of the vehicle may be equipped with more than one front axle, and/or more than two rear axles (not shown). In some embodiments, the vehicle may further comprise more than two vehicle sections, such as three or more connected vehicle sections.

The vehicle 10 further comprises an energy storage system 3. The energy storage system 3 is preferably configured to feed electric power to the below described electric motor(s) during propulsion. The energy storage system 3 is preferably a battery and can be configured to receive electrical power from a power grid. The electric motors may be in the form of electric machines configured as motors-generators, in which case the battery may also be configured to receive electrical power from the below described electric machines when using the electric machines for braking the vehicle, and/or from a fuel cell (not shown).

The vehicle 10 also comprises a control unit 1. The control unit 1 is coupled to the below described electric powertrains for controlling operation thereof. Further, the control unit 1 comprises processing circuitry which may include a microprocessor, microcontroller, programmable digital signal processor or another programmable device. The processing circuitry may also, or instead, each include an application specific integrated circuit, a programmable gate array or programmable array logic, a programmable logic device, or a digital signal processor. Where processing circuitry includes a programmable device such as the microprocessor, microcontroller or programmable digital signal processor mentioned above, the processor may further include computer executable code that controls operation of the programmable device. It should be understood that all or some parts of the functionality provided by means of the control circuitry may be at least partly integrated with an upper layer vehicle control unit (not shown) of the vehicle 10. Accordingly, the control unit 1 may thus control gear states of the below described transmission arrangements as well as operation of the electric motors. When controlling the gear states, the control unit 1 preferably controls operation of various actuators of the transmission arrangements.

As indicated above, the FIG. 1 vehicle 10 is propelled by an electric powertrain arrangement. In order to describe the electric powertrain arrangement in further detail, reference is now made to **FIG. 2**, which schematically illustrates an electric powertrain arrangement 80 according to an example embodiment. As can be seen in FIG. 2, the electric powertrain arrangement 80 comprises a first electric powertrain 90 connected to the first driven axle 16 and configured to propel the first pair of wheels 18. The first electric powertrain 90 comprises a first electric motor 91 and a first transmission arrangement 92. The first electric motor 91 is preferably electrically connected to the above-described energy storage system 3 of the vehicle 10. The first transmission arrangement 92 is configured to increase or decrease the rotational speed from the first electric motor 91 to the left 16' and right 16" first drive shafts, and in turn the first pair of wheels 18, 19. The first transmission arrangement 92 comprises a first differential gear set that in an open state distributes torque and rotational speed between the two wheels 18, 19, and that in a locked state forces the two wheels 18, 19 to rotate at the same rotational speed.

The electric powertrain arrangement 80 also comprises a second electric powertrain 94. The second electric powertrain 94 is connected to the second driven axle 24 and configured to propel the second pair of wheels 28. The second electric powertrain 94 comprises a second electric motor 95 and a second transmission arrangement 96. The second electric motor 95 is preferably electrically connected to the above-described energy storage system 3 of the vehicle 10. The second transmission arrangement 96 is configured to increase or decrease the rotational speed from the second electric motor 95 to the left 24' and right 24" second drive shafts, and in turn the second pair of wheels 28, 29. The second transmission arrangement 96 comprises a second differential gear set that in an open state distributes torque and rotational speed between the two wheels 28, 29, and that in a locked state forces the two wheels 28, 29 to rotate at the same rotational speed.

As further exemplified in FIG. 2, the electric powertrain arrangement 80 also comprises a third electric powertrain 97. However, it should be readily understood that the present invention is fully functional with the use of solely two electric powertrains, and the illustration of the third electric powertrain 97 is merely for illustrating and describing a conceivable alternative example.

The third electric powertrain 97 is connected to the third driven axle 26 and configured to propel the third pair of wheels 30. The third electric powertrain 97 comprises a third electric motor 98 and a third transmission arrangement 99. The third electric motor 98 is preferably electrically connected to the above-described energy storage system 3 of the vehicle 10. The third transmission arrangement 99 is configured to increase or decrease the rotational speed from the third electric motor 98 to the left 26' and right 26" third drive shafts, and in turn the third pair of wheels 30, 31. The third transmission arrangement 99 comprises a third differential gear set that in an open state distributes torque and rotational speed between the two wheels 30, 31, and that in a locked state forces the two wheels 30, 31 to rotate at the same rotational speed.

As is evident from the above description and as depicted in FIG. 2, the first 18, 19, second 28, 29, and third 30, 31 pairs of driven wheels are individually propelled by a respective electric powertrain 90, 94, i.e., they are not propelled by a single propulsion unit which is the case for e.g. a working machine propelled by a single internal combustion engine.

As further indicated in FIG. 2, each one of the driven wheels 18, 19, 28, 29, 30, 31 may be equipped with at least one sensor 40 for sensing a first property related to an instantaneous normal force between the respective wheel and the ground surface 2. The sensors 40 may, e.g., comprise accelerometers, wherein each driven wheel 18, 19, 28, 29, 30, 31 may comprise one or more accelerometers. Although one accelerometer per wheel may be sufficient, two or more accelerometers per wheel may provide a better resolution in terms of measurements per revolution. For example, tire monitoring system (TMS) modules comprising accelerometers may be used as the sensors 40. The vehicle 10 may further be equipped with other sensors, such as wheel speed sensors and/or one or more radar sensors configured to sense a distance to the ground surface and/or an actual vehicle speed. The one or more radar sensors may be positioned to enable sensing of a distance to the ground surface 2 in proximity of each one of the driven wheels 18, 19, 28, 29, 30, 31.

Although the electric powertrain arrangement 80 is in FIG. 2 illustrated as comprising one electric motor per driven axle, it is in other embodiments possible to provide two or more electric motors per driven axle. For example, at least one of the driven axles may comprise a first electric motor driving a first driven wheel via a first drive shaft, and a second electric motor driving a second driven wheel via a second drive shaft. Some or all driven axles may be of this type.

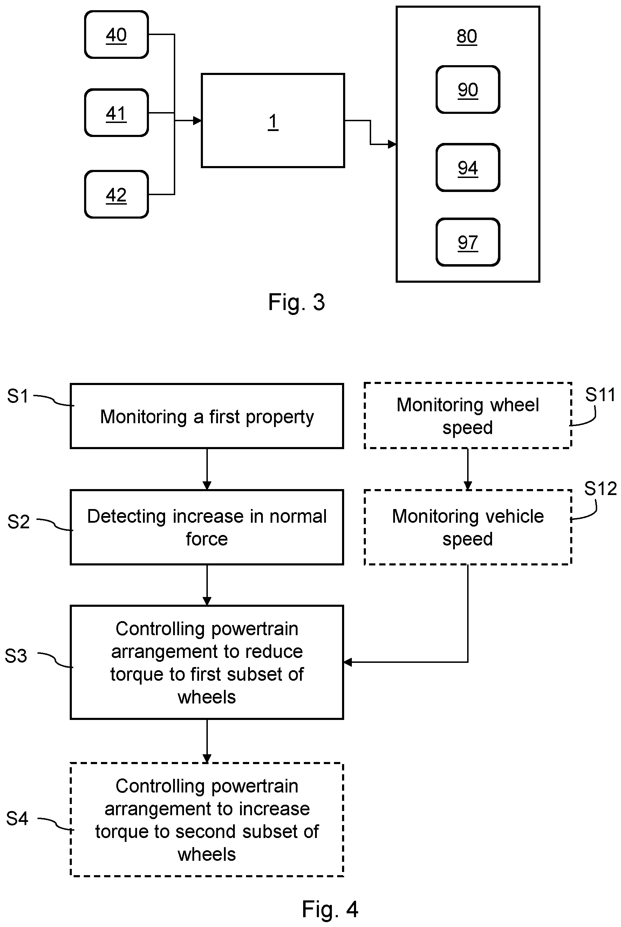

**FIG. 3** is a schematic diagram illustrating communicative connections between the control unit 1 and various parts of the vehicle 10. The processing circuitry of the control unit 1 is configured to monitor a first property indicative of an instantaneous normal force between each wheel of the plurality of driven wheels 18, 19, 28, 29, 30, 31 of the vehicle 10 and the ground surface 2 extending below the driven wheels 18, 19, 28, 29, 30, 31. It is further configured to detect that the monitored first property indicates a decrease in the instantaneous normal force between a first subset of the driven wheels 18, 19, 28, 29, 30, 31 and the ground surface 2, and in response thereto control the electric powertrain arrangement 80 of the vehicle 10 to reduce a torque delivered to the first subset of driven wheels. Monitoring of the first property is carried out by receiving signals from a plurality of sensors that may include the sensors 40 of each driven wheel as described above, and/or radar sensors 42 provided on a lower surface of the vehicle 10 and configured to measure a distance to the ground surface 2. The control unit 1 may further be configured to receive signals from e.g. wheel speed sensors 41 of each driven wheel 18, 19, 28, 29, 30, 31. The control unit 1 may be configured to control operation of the electric powertrain arrangement 80 of the vehicle 10 by controlling operation of the first 90, second 94, and third 97 electric powertrains, respectively, in dependence on the signals from the sensors 40, 41, 42.

**FIG. 4** illustrates a method according to an aspect of the disclosure, which method may be performed by the processing circuitry of the control unit 1. The method comprises the following actions, wherein optional actions are marked by dashed lines in FIG. 4:
**S1:** Monitoring a first property indicative of an instantaneous normal force between each wheel of the plurality of driven wheels 18, 19, 28, 29, 30, 31 of the vehicle 10 and the ground surface 2 below the driven wheels 18, 19, 28, 29, 30, 31. The first property may comprise a tire deformation, wherein the monitoring of the first property may comprise receiving sensor signals from a plurality of sensors 40. Each one of the driven wheels 18, 19, 28, 29, 30, 31 may comprise at least one of the sensors 40 as indicated in FIG. 2. The sensors 40 may be accelerometers providing an acceleration signal. Alternatively, the first property indicative of the instantaneous normal force may comprise a distance between the vehicle frame and the ground surface 2 in proximity of each driven wheel 18, 19, 28, 29, 30, 31, or at each driven axle 16, 24, 26. Radar sensors 42 provided on a lower surface of the vehicle 10 may be used to accurately measure the distance to the ground surface 2.
S2: Detecting that the monitored first property indicates a decrease in the instantaneous normal force between a first subset of the driven wheels and the ground surface 2. The first subset of driven wheels may comprise a single driven wheel, or two wheels provided on the same driven axle, or two or more driven wheels provided on different driven axles. Since a tire of a supported driving wheel, being in contact with the ground surface 2, is normally deformed due to the weight of the vehicle 10, the acceleration signal from the accelerometer of that wheel will be discontinuous. A discontinuity in the acceleration signal from one of the accelerometers is therefore indicative of a tire deformation. When all driven wheels 18, 19, 28, 29, 30, 31 have ground contact, the signals from all sensors 40 should include a discontinuity. A lack of discontinuity in the signal from one of the sensors 40 indicates that the wheel comprising that sensor 40 is lifted off the ground surface 2.
**S3:** In response to the detection in action S2, controlling the electric powertrain arrangement 80 of the vehicle 10 to reduce a torque delivered to the first subset of driven wheels. This may comprise controlling the at least one electric motor driving the first subset of driven wheels to reduce its output torque.
**S4:** Controlling the electric powertrain arrangement 80 to increase a torque delivered to a second subset of the driven wheels for which the monitored first property is not indicative of the decrease in the instantaneous normal force.

The controlling of the electric powertrain arrangement 80 in the actions S3 and S4 may comprise adjusting the torques delivered to the first subset of driven wheels and the second subset of driven wheels, respectively, such that a total driving torque delivered by the electric powertrain arrangement 80 to drive the vehicle 10 remains constant or essentially constant. When the first subset of driven wheels comprises two first driven wheels provided on a first driven axle of the plurality of driven axles 16, 24, 26 of the vehicle 10, and the second subset of driven wheels comprises at least two second driven wheels provided on at least one second driven axle of the plurality of driven axles 16, 24, 26, the controlling of the electric powertrain arrangement 80 in the actions S3 and S4 may comprise controlling at least one first electric motor, driving the first driven axle, to reduce its output torque, and controlling at least one second electric motor, driving the at least one second driven axle, to increase its output torque.

A predefined criterion may be set for the detection of the decrease in action S2, such that minor decreases, not fulfilling the criterion, do not cause the processing circuitry to carry out the actions S3 and S4. The detecting of that the monitored first property indicates a decrease may for example be carried out by determining a first value of the first property at a first point in time and a second value of the first property at a second point in time, and by determining that a difference between the first and second values is indicative of the decrease in the instantaneous normal force when the difference meets the predefined criterion. For example, the predefined criterion may be defined such that is considered met when the difference between the first and second values is larger than a predetermined threshold value. When the difference is smaller than the threshold value, the method returns to the action S1 of monitoring the first property.

The method may further comprise the optional actions **S11** of monitoring an instantaneous wheel speed of each wheel of the plurality of driven wheels 18, 19, 28, 29, 30, 31, and **S12** of monitoring an actual vehicle speed. The wheel speed may be monitored using wheel speed sensors 41 that may form part of the tire monitoring system. The actual vehicle speed may be monitored using radar sensors 42 or similar, configured to use the Doppler effect to detect the actual vehicle speed relative to the ground surface 2 or another fixed frame. The processing circuitry of the control unit 1 may in this case be configured to control the electric powertrain arrangement 80 based on a relation between the instantaneous wheel speed of each driven wheel 18, 19, 28, 29, 30, 31, and the actual vehicle speed. For example, if the relation between the instantaneous wheel speed of one or more of the driven wheels 18, 19, 28, 29, 30, 31 and the actual vehicle speed is indicative of wheel slip, the torque distributed to the slipping wheel or wheels may be reduced, whereas torque to the remaining wheels may be increased. The actions S11 and S12 may be carried out as a complement to the actions S1 and S2.

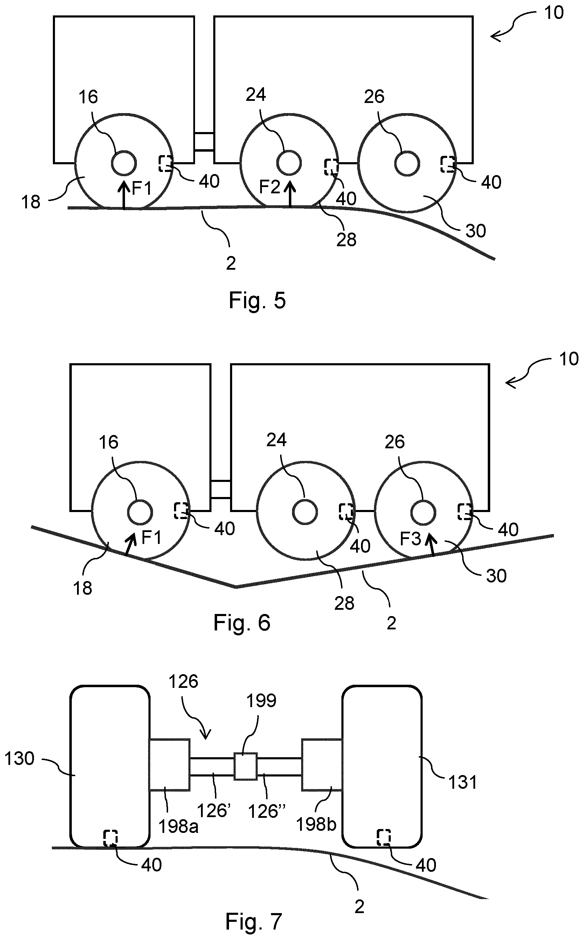

**FIGS. 5-7** illustrate three different example driving scenarios in which a vehicle 10 travels on an uneven ground surface 2 and in which the method disclosed herein may be used.

**FIG. 5** illustrates the vehicle 10 in a first driving scenario, in which an unevenness in the ground surface 2 causes the third pair of driven wheels 30, 31, mounted on the back rear axle 26, to be lifted off the ground surface 2. In this example, the tires of the first pair of wheels 18, 19 mounted on the front axle 16 and of the second pair of wheels 28, 29 mounted on the front rear axle 24 are deformed due to the vehicle weight. A first normal force F1 acting on the driven wheel 18 of the front driven axle 16 and a second normal force F2 acting on the driven wheel 28 of the front rear axle 24 are indicated. No normal force acts on the driven wheels 30, 31 of the back rear axle 26. A sensor 40 in the form of an accelerometer is provided within each driven wheel 18, 19, 28, 29, 30, 31. By monitoring the signals from the sensors 40, it is detected that the acceleration signals from the third pair of driven wheels 30, 31 become continuous as the wheels 30, 31 lose ground contact. As a result, it is detected that there is a decrease in the instantaneous normal force between a first subset of the driven wheels, comprising the third pair of driven wheels 30, 31, mounted on the back rear axle 26, and the ground surface 2. In response to this detection, the electric powertrain arrangement 80 is controlled by the control unit 1 to reduce the torque delivered to the third pair of driven wheels 30, 31 by reducing the output torque of the third electric motor 98. The electric powertrain arrangement 80 is further controlled to increase the output torque to the first 18, 19 and second 28, 29 pairs of driven wheels, having ground contact. The first 18, 19 and second 28, 29 pairs of driven wheels in this case constitute the second subset of driven wheels.

**FIG. 6** illustrates the vehicle 10 in a second driving scenario, in which another unevenness in the ground surface 2 causes the second pair of driven wheels 28, 29, mounted on the front rear axle 24, to be lifted off the ground surface 2. In this example, tires of the first pair of driven wheels 18, 19 mounted on the front axle 16 and of the third pair of driven wheels 30, 31 mounted on the back rear axle 26 are deformed due to the vehicle weight. A first normal force F1 acting on the driven wheel 18 of the front driven axle 16 and a third normal force F3 acting on the driven wheel 30 of the back rear axle 26 are indicated. No normal force acts on the driven wheels 28, 29 of the front rear axle 24. The reduction in instantaneous normal force acting on the second pair of driven wheels 28, 29 of the front rear axle 24 as the wheels 28, 29 lose ground contact is detected based on the signals from the sensors 40. In response to this detection, the electric powertrain arrangement 80 is controlled to reduce the torque delivered to the second pair of driven wheels 28, 29 by reducing the output torque of the second electric motor 95. The electric powertrain arrangement 80 is further controlled to increase the output torque to the first 18, 19 and third 30, 31 pairs of driven wheels, having ground contact. The first 18, 19 and third 30, 31 pairs of driven wheels in this case constitute the second subset of driven wheels.

**FIG. 7** illustrates a driven axle 126 of a vehicle in a schematic rear view, in a third driving scenario. The driven axle 126 comprises a first electric wheel motor 198a configured to drive a first driven wheel 130 via a first drive shaft 126', and a second electric wheel motor 198b configured to drive a second driven wheel 131 via a second drive shaft 126". A clutch 199 is provided for selectively locking the drive shafts 126', 126'' together, forcing the wheels 130, 131 to rotate at the same rotational speed. The clutch may typically be a friction clutch, such as a multi-plate clutch. The driven axle 126 may be one of several driven axles of a vehicle, such as one of three driven axles. The driven axle 126 may, for example, constitute one of the two rear driven axles of the vehicle 10 illustrated in FIG. 1. The wheels 130, 131 are equipped with sensors 40 in the form of accelerometers as described above.

In the third driving scenario, the first driven wheel 130 has ground contact, while the second driven wheel 131 has lost ground contact due to an unevenness in the ground surface 2. A decrease in normal force as the wheel 131 loses ground contact is detected based on the signals from the sensor(s) 40 of the second driven wheel 131. In response to the detection of the decrease, the second electric wheel motor 198b may be controlled to reduce its output torque, while the first electric wheel motor 198a may be controlled to increase its output torque. Alternatively, the clutch 199 may be controlled to lock the drive shafts 126', 126" together, forcing the wheels 130, 131 to rotate at the same rotational speed. Uncontrolled spinning of the second driven wheel 131 is thereby prevented.

In driving scenarios corresponding to the third driving scenario, but with a driven axle comprising a single electric motor configured to drive both driven wheels of that axle, the two drive shafts of the driven axle may be locked together in response to detecting that one of the wheels is lifted off the ground. For example, if the second wheel 31 of the back rear driven axle 26 illustrated in FIG. 2 is lifted off the ground surface 2, but the first driven wheel 30 still has ground contact, the third differential gear set of the third transmission arrangement 99 may be locked to prevent the second wheel 31 from spinning in an uncontrolled manner.

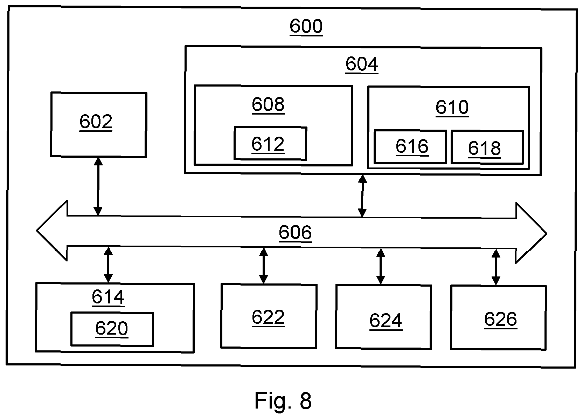

**FIG. 8** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604**, and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600**.

The computer system **600** may further include or be coupled to a non-transitory computer-readable storage medium such as the storage device **614**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610**, which may include an operating system **616** and/or one or more program modules **618**. All or a portion of the examples disclosed herein may be implemented as a computer program **620** stored on a transitory or non-transitory computer-usable or computer-readable storage medium (e.g., single medium or multiple media), such as the storage device **614**, which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of numbered examples of the disclosure is presented.

**Example 1:** A computer system (1, 600) comprising processing circuitry (602) configured to:
monitor a first property indicative of an instantaneous normal force between each wheel of a plurality of driven wheels (18, 19, 28, 29, 30, 31) of a vehicle (10) and a ground surface (2) below the driven wheels (18, 19, 28, 29, 30, 31),
detect that the monitored first property indicates a decrease in the instantaneous normal force between a first subset of the driven wheels and the ground surface (2), and in response thereto control an electric powertrain arrangement (80) of the vehicle (10) to reduce a torque delivered to the first subset of driven wheels.

**Example 2:** The computer system of Example 1, wherein the processing circuitry (602) is further configured to control the electric powertrain arrangement (80) to increase a torque delivered to a second subset of the driven wheels for which the monitored first property is not indicative of the decrease in the instantaneous normal force.

**Example 3:** The computer system of Example 2, wherein the processing circuitry (602) is configured to control the electric powertrain arrangement (80) by adjusting the torques delivered to the first subset of driven wheels and the second subset of driven wheels, respectively, such that a total driving torque delivered by the electric powertrain arrangement (80) to drive the vehicle (10) remains constant or essentially constant.

**Example 4:** The computer system of Example 2 or 3, wherein, when the first subset of driven wheels comprises two first driven wheels provided on a first driven axle of a plurality of driven axles (16, 24, 26) of the vehicle (10), and the second subset of driven wheels comprises at least two second driven wheels provided on at least one second driven axle of the plurality of driven axles (16, 24, 26), the processing circuitry (602) is configured to control the electric powertrain arrangement (80) by controlling at least one first electric motor driving the first driven axle to reduce its output torque, and controlling at least one second electric motor driving the at least one second driven axle to increase its output torque.

**Example 5:** The computer system of any one of Examples 2-4, wherein, when the first subset of driven wheels comprises one of two first driven wheels provided on a first driven axle of a plurality of driven axles (16, 24, 26) of the vehicle (10), and when the second subset of driven wheels comprises another one of the two first driven wheels provided on the first driven axle, the processing circuitry (602) is configured to control the electric powertrain arrangement (80) by one of: controlling the two first driven wheels to rotate together, or controlling a first electric wheel motor (198b) driving the one of the two first driven wheels (131) to reduce its output torque, and controlling a second electric wheel motor (198a) driving the other one of the two first driven wheels (130) to increase its output torque.

**Example 6:** The computer system of any one of the preceding Examples, wherein the processing circuitry (602) is configured to detect that the monitored first property indicates a decrease by: determining a first value of the first property at a first point in time and a second value of the first property at a second point in time, and determining that a difference between the first and second values is indicative of the decrease in the instantaneous normal force when the difference meets a predefined criterion.

**Example 7:** The computer system of any one of the preceding Examples, wherein the first property comprises a tire deformation and wherein the processing circuitry (602) is configured to monitor the first property by receiving sensor signals from a plurality of sensors (40), each one of the driven wheels (18, 19, 28, 29, 30, 31) comprising at least one of the sensors (40).

**Example 8:** The computer system of any one of the preceding Examples, wherein the processing circuitry (602) is further configured to: monitor an instantaneous wheel speed of each wheel of the plurality of driven wheels (18, 19, 28, 29, 30, 31), monitor an actual vehicle speed, wherein the processing circuitry (602) is further configured to control the electric powertrain arrangement (80) based on a relation between the instantaneous wheel speed of each driven wheel and the actual vehicle speed.

**Example 9:** A vehicle (10) comprising a plurality of driven wheels (18, 19, 28, 29, 30, 31) configured to engage a ground surface (2), an electric powertrain arrangement (80) configured to drive the plurality of driven wheels (18, 19, 28, 29, 30, 31), a plurality of sensors (40, 42) configured to collect measurement data relating to at least the first property, and the computer system (1, 600) of any one of Examples 1-8.

**Example 10:** The vehicle of Example 9, comprising at least three driven axles (18, 24, 26), each driven axle (18, 24, 26) comprising at least two of the plurality of driven wheels (18, 19, 28, 29, 30, 31), the electric powertrain arrangement (80) comprising at least three electric motors (91, 95, 98), wherein each driven axle (18, 24, 26) is configured to be driven by a respective at least one of the at least three electric motors (91, 95, 98).

**Example 11:** A computer-implemented method, comprising:
monitoring (S1), by processing circuitry (602) of a computer system (1), a first property indicative of an instantaneous normal force between each one of a plurality of driven wheels (18, 19, 28, 29, 30, 31) of a vehicle (10) and a ground surface (2) below the driven wheels (18, 19, 28, 29, 30, 31),
detecting (S2), by the processing circuitry (602), that the monitored first property indicates a decrease in the instantaneous normal force between a first subset of the driven wheels and the ground surface (2), and in response thereto controlling (S3), by the processing circuitry (602), an electric powertrain arrangement (80) of the vehicle (10) to reduce a torque delivered to the first subset of driven wheels.

**Example 12:** The method of Example 11, further comprising: controlling (S4), by the processing circuitry, the electric powertrain arrangement (80) to increase a torque delivered to a second subset of the driven wheels for which the monitored first property is not indicative of the decrease in the instantaneous normal force.

**Example 13:** The method of Example 12, wherein the controlling (S3, S4) of the electric powertrain arrangement (80) comprises adjusting the torques delivered to the first subset of driven wheels and the second subset of driven wheels, respectively, such that a total driving torque delivered by the electric powertrain arrangement (80) to drive the vehicle (10) remains constant or essentially constant.

**Example 14:** The method of Example 12 or 13, wherein, when the first subset of driven wheels comprises two first driven wheels provided on a first driven axle of a plurality of driven axles (16, 24, 26) of the vehicle (10), and the second subset of driven wheels comprises at least two second driven wheels provided on at least one second driven axle of the plurality of driven axles (16, 24, 26), the controlling (S3, S4) of the electric powertrain arrangement (80) comprises controlling at least one first electric motor driving the first driven axle to reduce its output torque, and controlling at least one second electric motor driving the at least one second driven axle to increase its output torque.

**Example 15:** The method of any one of Examples 12-14, wherein, when the first subset of driven wheels comprises one of two first driven wheels provided on a first driven axle of a plurality of driven axles (16, 24, 26) of the vehicle (10), and when the second subset of driven wheels comprises another one of the two first driven wheels provided on the first driven axle, the controlling (S3, S4) of the electric powertrain arrangement (80) comprises one of: controlling the two first driven wheels to rotate together, or controlling a first electric wheel motor (198b) driving the one of the two first driven wheels (131) to reduce its output torque, and controlling a second electric wheel motor (198a) driving the other one of the two first driven wheels (130) to increase its output torque.

**Example 16:** The method of any one of Examples 11-15, wherein the detecting (S2) of that the monitored first property indicates a decrease comprises: determining a first value of the first property at a first point in time and a second value of the first property at a second point in time, and determining that a difference between the first and second values is indicative of the decrease in the instantaneous normal force when the difference meets a predefined criterion.

**Example 17:** The method of any one of Examples 11-16, wherein the first property comprises a tire deformation and wherein the monitoring (S1) of the first property comprises receiving sensor signals from a plurality of sensors (40), each one of the driven wheels (18, 19, 28, 29, 30, 31) comprising at least one of the sensors (40).

**Example 18:** The method of any one of Examples 11-17, further comprising: monitoring (S11), by the processing circuitry (602), an instantaneous wheel speed of each wheel of the plurality of driven wheels (18, 19, 28, 29, 30, 31), monitoring (S12), by the processing circuitry (602), an actual vehicle speed, wherein the controlling (S3, S4) of the electric powertrain arrangement (80) is further based on a relation between the instantaneous wheel speed of each driven wheel and the actual vehicle speed.

**Example 19:** A computer program product (614) comprising program code (620) for performing, when executed by the processing circuitry (602), the method of any of Examples 11-18.

**Example 20:** A non-transitory computer-readable storage medium (614) comprising instructions, which when executed by the processing circuitry (602), cause the processing circuitry (602) to perform the method of any of Examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (1, 600) comprising processing circuitry (602) configured to:
monitor a first property indicative of an instantaneous normal force between each one of a plurality of driven wheels (18, 19, 28, 29, 30, 31) of a vehicle (10) and a ground surface (2) below the driven wheels (18, 19, 28, 29, 30, 31),
detect that the monitored first property indicates a decrease in the instantaneous normal force between a first subset of the driven wheels and the ground surface (2), and in response thereto control an electric powertrain arrangement (80) of the vehicle (10) to reduce a torque delivered to the first subset of driven wheels.

2. The computer system of claim 1, wherein the processing circuitry (602) is further configured to:
control the electric powertrain arrangement (80) to increase a torque delivered to a second subset of the driven wheels for which the monitored first property is not indicative of the decrease in the instantaneous normal force.

3. The computer system of claim 2, wherein the processing circuitry (602) is configured to control the electric powertrain arrangement (80) by adjusting the torques delivered to the first subset of driven wheels and the second subset of driven wheels, respectively, such that a total driving torque delivered by the electric powertrain arrangement (80) to drive the vehicle (10) remains constant or essentially constant.

4. The computer system of claim 2 or 3, wherein, when the first subset of driven wheels comprises two first driven wheels provided on a first driven axle of a plurality of driven axles (16, 24, 26) of the vehicle (10), and the second subset of driven wheels comprises at least two second driven wheels provided on at least one second driven axle of the plurality of driven axles (16, 24, 26), the processing circuitry (602) is configured to control the electric powertrain arrangement (80) by controlling at least one first electric motor driving the first driven axle to reduce its output torque, and controlling at least one second electric motor driving the at least one second driven axle to increase its output torque.

5. **The computer** system of any one of claims 2-4, wherein, when the first subset of driven wheels comprises one of two first driven wheels provided on a first driven axle of a plurality of driven axles (16, 24, 26) of the vehicle (10), and when the second subset of driven wheels comprises another one of the two first driven wheels provided on the first driven axle, the processing circuitry (602) is configured to control the electric powertrain arrangement (80) by one of:
controlling the two first driven wheels to rotate together, or
controlling a first electric wheel motor (198b) driving the one of the two first driven wheels (131) to reduce its output torque and controlling a second electric wheel motor (198b) driving the other one of the two first driven wheels (130) to increase its output torque.

6. The computer system of any one of the preceding claims, wherein the processing circuitry (602) is configured to detect that the monitored first property indicates a decrease by:
determining a first value of the first property at a first point in time and a second value of the first property at a second point in time, and
determining that a difference between the first and second values is indicative of the decrease in the instantaneous normal force when the difference meets a predefined criterion.

7. The computer system of any one of the preceding claims, wherein the first property comprises a tire deformation and wherein the processing circuitry (602) is configured to monitor the first property by receiving sensor signals from a plurality of sensors (40), each one of the driven wheels (18, 19, 28, 29, 30, 31) comprising at least one of the sensors (40).

8. The computer system of any one of the preceding claims, wherein the processing circuitry (602) is further configured to:
monitor an instantaneous wheel speed of each wheel of the plurality of driven wheels (18, 19, 28, 29, 30, 31),
monitor an actual vehicle speed,
wherein the processing circuitry (602) is further configured to control the electric powertrain arrangement (80) based on a relation between the instantaneous wheel speed of each driven wheel and the actual vehicle speed.

9. A vehicle (10) comprising a plurality of driven wheels (18, 19, 28, 29, 30, 31) configured to engage a ground surface (2), an electric powertrain arrangement (80) configured to drive the plurality of driven wheels (18, 19, 28, 29, 30, 31), a plurality of sensors (40, 42) configured to collect measurement data relating to at least the first property, and the computer system (1, 600) of any one of claims 1-8.

10. The vehicle of claim 9, comprising at least three driven axles (18, 24, 26), each driven axle (18, 24, 26) comprising at least two of the plurality of driven wheels (18, 19, 28, 29, 30, 31), the electric powertrain arrangement (80) comprising at least three electric motors (91, 95, 98), wherein each driven axle (18, 24, 26) is configured to be driven by a respective at least one of the at least three electric motors (91, 95, 98).

11. A computer-implemented method, comprising:
monitoring (S1), by processing circuitry (602) of a computer system (1), a first property indicative of an instantaneous normal force between each one of a plurality of driven wheels (18, 19, 28, 29, 30, 31) of a vehicle (10) and a ground surface (2) below the driven wheels (18, 19, 28, 29, 30, 31),
detecting (S2, by the processing circuitry (602), that the monitored first property indicates a decrease in the instantaneous normal force between a first subset of the driven wheels and the ground surface (2), and in response thereto controlling (S3), by the processing circuitry (602), an electric powertrain arrangement (80) of the vehicle (10) to reduce a torque delivered to the first subset of driven wheels.

12. The method of claim 11, further comprising:
controlling (S4), by the processing circuitry, the electric powertrain arrangement (80) to increase a torque delivered to a second subset of the driven wheels for which the monitored first property is not indicative of the decrease in the instantaneous normal force.

13. The method of claim 12, wherein the controlling (S3, S4) of the electric powertrain arrangement (80) comprises adjusting the torques delivered to the first subset of driven wheels and the second subset of driven wheels, respectively, such that a total driving torque delivered by the electric powertrain arrangement (80) to drive the vehicle (10) remains constant or essentially constant.

14. A computer program product (614) comprising program code (620) for performing, when executed by the processing circuitry (602), the method of any of claims 11-13.

15. A non-transitory computer-readable storage medium (614) comprising instructions, which when executed by the processing circuitry (602), cause the processing circuitry (602) to perform the method of any of claims 11-13.
